# EUROPEAN PATENT APPLICATION

(11) **EP 2 722 350 A1**
(43) Date of publication of application: **23.04.2014**
(21) Application number: 12189263.2
(22) Date of filing: 19.10.2012
(51) Int. Cl.: C08F 214/26, C08F 234/02

(54) **Amorphous fluorinated polymer**

(71) Applicant: Solvay Specialty Polymers Italy S.p.A., 20021 Bollate (MI) (IT)
(72) Inventor: Avataneo, Marco, 20030 SENAGO (MI) (IT); Veneorini, Alessandro, 20026 NOVATE MILANESE (MI) (IT)
(74) Representative: Benvenuti, Federica

(57) **Abstract**

An amorphous fluorinated polymer provided with improved adhesion to glass comprising recurring units derived from at least one fluorinated monomer providing alicyclic structures in the polymer main chain and fluorinated monomers comprising -SO₂X functional groups.

## Description

### Technical Field

The present invention relates to an amorphous fluorinated polymer, in particular it relates to an amorphous fluorinated polymer provided with improved adhesion to glass and at the same time good light transmission properties.

### Background Art

Amorphous fluorinated polymers containing alicyclic structures in the polymer main chain, e.g. recurring units deriving from 1,3-dioxole monomers, are characterized by a very low refractive index, generally between 1.32-1.35, and high transparency which renders them particularly suitable for the preparation of anti-reflective coatings, anti-glare-coatings, protective transparent coatings and the like. Anti-reflective and anti-glare coatings are a type of optical coating applied to the surface of optical and other devices to reduce reflection. This improves the efficiency of the system since less light is lost. Anti-reflective and anti-glare coatings find a large use in the production of an increasing number of optical and electronic devices. Good adhesion to glassy substrates is however a prerequisite for the application. However, fluorinated polymers have limited adhesion to substrates. For this reason, surface treatment may be necessary to alter and enhance adhesion of fluorinated polymers to substrates such as glass and silicon. Fluorosilanes have been suggested to improve the adhesion to glass and silicon. The treatment requires several steps, and, additionally, whatever adhesion is obtained is not chemical in nature and it tends to decrease with the time. Thus, there is still need in the art for fluorinated polymers having low refractive index, high transparency and improved adhesion to glass substrates.

Amorphous fluorinated polymers comprising recurring units derived from perfluoro-4-alkoxy-1,3-dioxole have been described in EP 803557 A (SOLVAY SOLEXIS SPA) 29.10.1997 and in EP 1256591 A (SOLVAY SOLEXIS SPA) 13.11.2002.

US 4530569 (DU PONT DE NEMOURS) 23.07.1985 discloses clad optical fibers wherein the cladding consists of an amorphous copolymer of perfluoro-2,2-dimethyl-1,3-dioxole, tetrafluoroethylene and optionally another ethylenically unsaturated monomer. Examples are provided of copolymers comprising 87.1 mol% tetrafluoroethylene, 12.3 mol% perfluoro-2,2-dimethyl-1,3-dioxole, and 0.6 mol% CF₂=CFOCF₂CF(CF₃ )OCF₂CF₂SO₂F. No mention is made of the transparency of this copolymer.

EP 416528 A (DU PONT DE NEMOUR) 13.03.1991 discloses a thin film of an amorphous copolymer of 30-99 mol% of perfluoro-2,2-dimethyl-1,3-dioxole with complementary amounts of at least one other fluorinated ethylenically unsaturated monomer having a refractive index between 1.24 and 1.41 and which absorbs less than 10% light at wavelengths between 180 and 820 nm for use as dust defocusing covers in photolithographic applications.

EP 645406 A (DU PONT DE NEMOURS) 29.03.1995 discloses an amorphous copolymer of 65-99 mol% of perfluoro-2,2-dimethyl-1,3-dioxole with complementary amounts of a) tetrafluoroethylene and, optionally, at least one comonomer selected from a list and including fluorovinyl ethers of the formula CF₂=CFOQZ, where Q is a perfluorinated alkylene radical containing 0-5 ether oxygen atoms and Z is a group selected from the class consisting of -COOR, -SO₂F, -CN, -COF, and -OCH₃. Examples are provided of terpolymers containing perfluoro-2,2-dimethyl-1,3-dioxole, tetrafluoroethylene and CF₂=CFOCF₂CF(CF₃)OCF₂CF₂COOCH₃. The polymers are described inter alia as having good adhesion properties to copper.

EP 969295 A (ASAHI GLASS COMPANY LTD.) 05.01.2000 discloses a cladding for an optical waveguide comprising a fluorinated alicyclic structure-containing polymer having functional groups. Carboxylic acid groups are the preferred functional groups in view of their good adhesion to a silicon substrate and low impact on the transparency of the polymer.

It has now been found that a fine balance between higher adhesion to glass substrates and transparency can be obtained with polymers containing alicyclic structures in the main chain which contain a specific, narrow, amount of ethylenically unsaturated monomers comprising -SO₂X functional groups. Beyond said range either the transparency of the resulting polymer is impaired or the adhesion to glass is unsatisfactory.

### Summary of invention

A first object of the present invention is thus an amorphous fluorinated polymer [polymer (P)] comprising:
- at least 20 mol% of recurring units derived from at least one fluorinated monomer providing alicyclic structures in the polymer main chain [fluorinated monomer (CM)];
- from 1.5 to 7.5 mol% of recurring units derived from at least one fluorinated monomer comprising -SO₂X functional groups [fluorinated functional monomer (FFM)]; and
- optionally, recurring units derived from at least one ethylenically unsaturated fluorinated monomer [fluorinated monomer (FM)] in an amount complementary to 100 mol%.

The term "amorphous" is used herein in its usual meaning, in that it refers to a material having no crystallinity. For the purposes of the present invention an amorphous material is intended to be a material characterized by a heat of fusion lower than 5 J/g as determined by differential scanning calorimetry (DSC) according to ASTM D3418-08.

The expression "at least one" when referred to a monomer of any type is understood to mean that the amorphous copolymer can comprise recurring units derived from one or more than one monomer of that type.

The expression "fluorinated monomer providing alicyclic structures in the polymer main chain" hereinafter indicated as "fluorinated monomer (CM)", is used in the present specification to denote fluorinated monomers having either an alicyclic structure or a fluorinated monomer having two polymerizable double bonds capable of forming an alicyclic structure. Preferably the alicyclic structure in the main chain of polymer (P) comprises a 5- or 6-membered cycle.

Advantageously, the at least one fluorinated monomer (CM) in polymer (P) is selected from the group consisting of:
- the fluorodioxoles of formula (I): 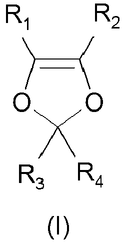 wherein R₁, R₂, R₃ and R₄, equal to or different from each other, are independently selected from the group consisting of -F, a C₁-C₆ fluoroalkyl, optionally comprising one or more oxygen atoms, a C₁-C₆ fluoroalkoxy, optionally comprising one or more oxygen atoms;
- the fluorodioxolanes of formula (II): 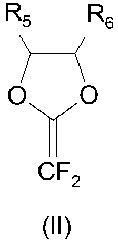 wherein R₅ and R₆, equal to or different from each other, are independently selected from the group consisting of -F, a C₁-C₆ fluoroalkyl, optionally comprising one or more oxygen atoms, a C₁-C₆ fluoroalkoxy, optionally comprising one or more oxygen atoms; and
- the cyclopolymerizable monomers of formula (III):

   CR₇R₈=CR₉OCR₁₀R₁₁(CR₁₂R₁₃)ₐ(O)_{b}CR₁₄=CR₁₅R₁₆ (III)

   wherein each R₇ to R₁₆, independently of one another, is selected from -F, and a C₁-C₃ fluoroalkyl, a is 0 or 1, b is 0 or 1 with the proviso that b is 0 when a is 1.

In a first embodiment of polymer (P) the at least one fluorinated monomer (CM) is selected from the group consisting of the fluorodioxoles of formula (I): 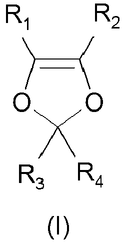 wherein R₁, R₂, R₃ and R₄, equal to or different from each other, are independently selected from the group consisting of -F, a C₁-C₆ fluoroalkyl, optionally comprising one or more oxygen atoms, a C₁-C₆ fluoroalkoxy, optionally comprising one or more oxygen atoms.

The terms "fluoroalkyl" and "fluoroalkoxy" are used herein to indicate a fluorinated alkyl or alkoxy radical optionally comprising hydrogen atoms and/or optionally comprising one or more halogen atom different from fluorine, i.e. Cl, Br, I and/or optionally comprising functional groups. Non limiting examples of suitable C₁-C₆ fluoroalkyl substituents are: -CF₃, -CF₂ H, -CF₂Y, -C₂F₅, -C₃F₇ , -C₄F₉, -C₅F₁₁, -C₆F₁₃, -C₂F₄Y, wherein Y is a functional group selected from the class consisting of -CN, -COOR, -NR₂, -COF, and R is a C₁-C₃ fluoroalkyl. Non limiting examples of suitable C₁-C ₆ fluoroalkoxy substituents are: -OCF₃, -OC₂F₅, -OC₃F₇, -OCF₂CF₂OCF₃, -OC₄F₉, -OCF₂CF₂OCF₂CF₂0CF₃, -OC₅F1_{1,} -OCF₂Y, -OCF₂CF₂OCF₂Y, wherein Y is as defined above.

Preferably polymer (P) of the invention comprises a fluorodioxole of formula (I) wherein R₁, R₂, R₃ and R₄, equal to or different from each other, are independently selected from the group consisting of -F, a C₁-C₃ perfluoroalkyl, e.g. -CF₃, -C₂F₅, -C₃F₇, and a C₁-C₃ perfluoroalkoxy optionally comprising one oxygen atom, e.g. -OCF₃, -OC₂F₅, -OC₃F₇, -OCF₂CF₂OCF₃. For the avoidance of doubts, the terms "perfluoroalkyl" and "perfluoroalkoxy" are used herein to indicate a fully fluorinated alkyl or alkoxy radical.

Polymer (P) may comprise a fluorodioxole of formula (I) wherein R₁=R₂= -F and R₃=R₄ is a C₁-C₃ perfluoroalkyl, e.g. -CF₃, -C₂F₅, -C₃F₇, preferably R₃=R₄= -CF₃.

Preferably polymer (P) comprises a fluorodioxole of formula (I) wherein R₁ =R₃=R₄ = -F and R₂ is a C₁-C₃ perfluoroalkoxy, e.g. -OCF₃, -OC₂F₅, -OC₃ F₇. More preferably polymer (P) comprises a fluorodioxole of formula (I) wherein R₁ =R₃=R₄= F and R₂= -OCF₃, that is 2,2,4-trifluoro-5-trifluoromethoxy-1,3-dioxole (TTD).

Fluorodioxoles of formula (I) may be conveniently prepared as described for instance in EP 633257 A (AUSIMONT SPA) 10.01.1995.

In a second embodiment of polymer (P) the fluorinated monomer (CM) is selected from the group consisting of the fluorodioxolanes of formula (II): 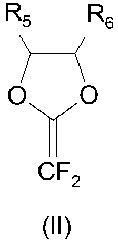 wherein R₅ and R₆, equal to or different from each other, are independently selected from the group consisting of -F, a C₁-C₆ fluoroalkyl, optionally comprising one or more oxygen atoms, a C₁-C₆ fluoroalkoxy, optionally comprising one or more oxygen atoms. Preferably, R₅ is -F and R₆ is -CF₃.

In a third embodiment of polymer (P) the fluorinated monomer (CM) is selected from the group consisting of the cyclopolymerizable monomers of formula (III):

CR₇R₈=CR₉OCR₁₀R₁₁(CR₁₂R₁₃)ₐ(O)_{b}CR₁₄=CR₁₅R₁₆ (III)

wherein each R₇ to R₁₆, independently of one another, is selected from -F, and a C₁-C₃ fluoroalkyl, a is 0 or 1, b is 0 or 1 with the proviso that b is 0 when a is 1. Preferably in formula (III) each R₇ to R₁₆ is -F. More preferably in formula (III) each R₇ to R₁₆ is -F, a=1 and b=0.

A polymer (P) wherein the at least one fluorinated monomer (CM) is selected from the group of the fluorodioxoles of formula (I), and advantageously is 2,2,4-trifluoro-5-trifluoromethoxy-1,3-dioxole, is preferred.

Polymer (P) may consist of recurring units derived from at least one fluorinated monomer (CM) and from at least one fluorinated monomer comprising -SO₂X functional groups, hereinafter referred to as fluorinated functional monomer (FFM). In such an embodiment polymer (P) may contain up to 98.5 mol% of recurring units derived from at least one fluorinated monomer (CM).

Preferably polymer (P) comprises in addition to recurring units derived from at least one fluorinated monomer (CM) and from at least one fluorinated functional monomer (FFM) also recurring units derived from an ethylenically unsaturated fluorinated monomer, hereinafter referred to as ethylenically unsaturated fluorinated monomer (FM). In such an embodiment the amount of recurring units derived from the at least one fluorinated monomer (CM) in polymer (P) does not exceed 90 mol%, preferably it does not exceed 85 mol%, more preferably it does not exceed 80 mol%.

Polymer (P) comprises at least 20 mol% of recurring units derived from at least one fluorinated monomer (CM). Preferably polymer (P) comprises at least 25 mol% of recurring units derived from at least one fluorinated monomer (CM), more preferably at least 30 mol% of recurring units derived from at least one fluorinated monomer (CM).

Polymer (P) comprises from 1.5 to 7.5 mol% of recurring units derived from at least one fluorinated functional monomer (FFM).

Suitable fluorinated functional monomers (FFM) may be selected from the group consisting of:
- sulfonyl halide fluoroolefins of formula: CF₂=CF(CF₂)pSO₂X wherein p is an integer between 0 and 10, preferably between 1 and 6, more preferably p is equal to 2 or 3, and wherein X is chosen among halogens (Cl, F, Br, I), -O-M⁺, wherein M⁺ is a cation selected among H ⁺, NH₄⁺, K⁺, Li⁺, Na⁺, or mixtures thereof;
- sulfonyl halide fluorovinylethers of formula: CF₂=CF-O-(CF₂)ₘSO₂X wherein m is an integer between 1 and 10, preferably between 1 and 6, more preferably between 2 and 4, even more preferably m equals 2, and wherein X is as defined above;
- sulfonyl halide fluoroalkoxyvinylethers of formula:

   CF₂=CF-(OCF₂CF(R₁₇))_{w}-O-CF₂(CF(R₁₈))_{y}SO₂X

   wherein w is an integer between 0 and 2, R₁₇ and R₁₈, equal or different from each other, are independently -F, -Cl or a C₁-C₁₀ fluoroalkyl group, optionally substituted with one or more ether oxygens, y is an integer between 0 and 6; preferably w is 1, R₁₇ is -CF₃, y is 1 and R₁₈ is -F, and wherein X is as defined above;
- sulfonyl halide aromatic fluoroolefins of formula CF₂=CF-Ar-SO₂X wherein Ar is a C₅-C₁₅ aromatic or heteroaromatic substituent, and wherein X is as defined above.

Preferably the fluorinated functional monomer (FFM) is selected from the group of the sulfonyl fluorides, i.e. wherein X = F.

More preferably the fluorinated functional monomer (FFM) is selected from the group consisting of:
- the fluorovinylethers of formula CF₂=CF-O-(CF₂)ₘ-SO₂F, wherein m is an integer between 1 and 6, preferably between 2 and 4; and
- sulfonyl halide fluoroalkoxyvinylethers of formula:

   CF₂=CF-(OCF₂CF(R₁₇))_{w}-O-CF₂(CF(R₁₈))_{y}SO₂F

   wherein w is an integer between 0 and 2, R₁₇ and R₁₈, equal or different from each other, are independently -F, -Cl or a C₁-C₁₀ fluoroalkyl group, optionally substituted with one or more ether oxygens, y is an integer between 0 and 6; preferably w is 1, R₁₇ is -CF₃, y is 1 and R₁₈ is -F.

Even more preferably the fluorinated functional monomer (FFM) is CF₂ =CFOCF₂CF₂-SO₂F (perfluoro-5-sulfonylfluoride-3-oxa-1-pentene).

The amount of the at least one fluorinated functional monomer (FFM) in polymer (P) is at least 1.5 mol%, preferably at least 2.0 mol%.

The amount of the at least one fluorinated functional monomer (FFM) in polymer (P) does not exceed 7.5 mol%, preferably it does not exceed 7.0 mol%, more preferably it does not exceed 6.0 mol%.

It has been found that an amount of the at least one fluorinated functional monomer (FFM) in polymer (P) lower than 1.5 mol% does not provide any significant improvement in the adhesion of the polymer to glass substrates. On the other hand an amount exceeding 7.5 mol% has been observed to decrease by more than 20% the transmittance of a film or coating made with polymer (P) in the visible area of the light spectrum.

When the fluorinated functional monomer (FFM) is CF₂=CFOCF₂CF₂-SO₂ F a good balance between adhesion to glass and transparency has been obtained with polymers (P) comprising from 2.0 to 5.0 mol% of CF₂ =CFOCF₂CF₂-SO₂F.

Polymer (P) may contain, and preferably contains, recurring units derived from at least one ethylenically unsaturated fluorinated monomer (FM).

Non limiting examples of suitable ethylenically unsaturated fluorinated monomers (FM) are those selected from the group consisting of:
- C₂-C₈ fluoroolefins, such as tetrafluoroethylene (TFE), pentafluoropropylene, hexafluoropropylene (HFP), and hexafluoroisobutylene;
- vinylidene fluoride (VDF);
- C₂-C₈ chloro- and/or bromo- and/or iodo-fluoroolefins, such as chlorotrifluoroethylene (CTFE) and bromotrifluoroethylene;
- fluoroalkylvinylethers of formula CF₂=CFOR₁₉, wherein R₁₉ is a C₁-C₆ fluoroalkyl, e.g. -CF₃, -C₂F₅, -C₃F₇;
- fluoro-oxyalkylvinylethers of formula CF₂=CFOZ, wherein Z is a C₁-C₁₂ fluoro-oxyalkyl having one or more ether groups, for example perfluoro-2-propoxy-propyl;
- fluoroalkyl-methoxy-vinylethers of formula CF₂=CFOCF₂OR₂₀ in which R₂₀ is a C₁-C₆ fluororoalkyl, e.g. -CF₃, -C₂F₅, -C₃F₇ or a C₁-C₆ fluorooxyalkyl having one or more ether groups, like -C₂F₅-O-CF₃.

Preferably the at least one ethylenically unsaturated fluorinated monomer (FM) is selected from the group consisting of:
- C₃-C₈ fluoroolefins, preferably tetrafluoroethylene (TFE) and/or hexafluoropropylene (HFP);
- chloro- and/or bromo- and/or iodo-C₂-C₆ fluoroolefins, like chlorotrifluoroethylene (CTFE) and/or bromotrifluoroethylene;
- fluoroalkylvinylethers of formula CF₂=CFOR₁₉ in which R₁ is a C₁-C₆ fluoroalkyl, e.g. -CF₃, -C₂F₅, -C₃F₇ ;
- fluoro-oxyalkylvinylethers of formula CF₂=CFOZ, in which Z is a C₁-C₁₂ fluorooxyalkyl having one or more ether groups, like perfluoro-2-propoxy-propyl.

More preferably the at least one ethylenically unsaturated fluorinated monomer (FM) is tetrafluoroethylene.

Polymer (P) typically contains at least 15 mol% of recurring units derived from the at least one ethylenically unsaturated fluorinated monomer (FM), preferably at least 20 mol%.

In an embodiment of the invention polymer (P) essentially consists of:
- from 20 to 85 mol% of recurring units derived from fluorinated monomer (CM);
- from 1.5 to 7.5 mol% of recurring units derived from fluorinated functional monomer (FFM); and
- recurring units derived from ethylenically unsaturated fluorinated monomer (FM) in an amount complementary to 100 mol%.

The expression "essentially consists of" is used herein to indicate that chain ends, defects and additional unspecified ingredients which do not affect the properties of polymer (P) might be comprised in polymer (P). Typically these additional ingredients are present in an amount not exceeding 1 mol%.

In an advantageous embodiment of the invention polymer (P) comprises, preferably essentially consists of:
- from 20 to 85 mol% of recurring units derived from 2,2,4-trifluoro-5-trifluoromethoxy-1,3-d ioxole;
- from 1.5 to 7.5 mol% of recurring units derived from CF₂=CFOCF₂CF₂ -SO₂F; and
- recurring units derived from tetrafluoroethylene in an amount complementary to 100 mol%.

In an aspect of said embodiment polymer (P) comprises:
- from 30 to 80 mol% of recurring units derived from 2,2,4-trifluoro-5-trifluoromethoxy-1,3-d ioxole;
- from 2.0 to 5.0 mol% of recurring units derived from CF₂=CFOCF₂CF₂ -SO₂F; and
- recurring units derived from tetrafluoroethylene in an amount complementary to 100 mol%.

Preferably polymer (P) essentially consists of the recurring units detailed above.

Polymer (P) may be obtained by free radical polymerization processes in suspension or emulsion in water, including microemulsion. Alternatively polymer (P) may be obtained by employing a radical photoinitiator in the presence of visible-UV radiation, either in suspension or in emulsion. Both processes are described for instance in EP 1067145 A (AUSIMONT SPA) 10.01.2001 .

Polymer (P) may advantageously be used for the preparation of films and coatings. Suitable applications include without limitation :
- anti-reflective layers, which are used in a wide variety of applications where light passes through an optical surface, and low loss or low reflection is desired; examples include anti-glare coatings on corrective lenses, camera lens elements, telescopes, solar cells;
- protective transparent coatings for those objects which may be exposed to adverse atmospheric conditions (for example, smog, rain and snow), chemical or aggressive environments;
- dielectric layers for organic displays and electronic devices (e.g. OLED, OFET) to improve the adhesion to substrates like glass and metal oxide.

A further object of the present invention is accordingly a film or a coating comprising polymer (P).

The term "film" is used herein to refer to a self-supported thin sheet of material, typically having a thickness from 5 to 1000 microns, preferably from 5 to 500 microns.

Films may be prepared by casting from polymer solutions or by any other technique known in the art, e.g. extrusion. When prepared by casting, the polymer solution may be cast over an inert, non porous, support in a film-forming layer which, after a drying step, is removed from the support providing a film.

The term "coating" refers to a thin layer of material which is directly applied to a substrate, e.g. a glass substrate, for instance from a solution or from the polymer melt. Depending on the coating technique coatings may have a thickness from 4 nm to 25 microns, typically from 10 nm to 10 microns, more typically from 50 nm to 5 microns. Coatings may be prepared from polymer solutions according to any technique known in the art. Suitable coating techniques include spin-coating, dip-coating, ink jet printing.

The film or coating may comprise other ingredients in addition to polymer (P). In an embodiment of the invention the film or coating comprises, in addition to polymer (P), an amorphous fluorinated polymer [polymer (AP)] comprising recurring units derived from at least one fluorinated monomer providing alicyclic structures in the polymer main chain; and optionally recurring units derived from at least one ethylenically unsaturated fluorinated monomer in an amount complementary to 100 mol%. The amount of polymer (AP) in the film or coating is such that the total amount of the fluorinated monomer comprising -SO₂X functional groups in the film or coating, is of at least 1.5 mol% and up to 7.5 mol% when calculated with respect to the total amount of polymer (P) and polymer (AP).

The at least one fluorinated monomer providing alicyclic structures in the polymer main chain and/or the ethylenically unsaturated fluorinated monomer in polymer (AP) may be the same or different from the at least one fluorinated monomer (CM) and the ethylenically unsaturated monomer (FM) in polymer (P).

Preferably, the film or coating comprising polymer (P) is prepared from a solution of polymer (P), and optionally polymer (AP), in a suitable solvent.

Accordingly the process for preparing the film or the coating of polymer (P) comprises the step of casting a solution of polymer (P), and optionally polymer (AP), in a fluorinated solvent. Thus in a previous step the process comprises preparing a solution of polymer (P), and optionally polymer (AP), in a fluorinated solvent. The solution may be prepared according to methods known in the art.

Polymer (P) of the present invention is soluble in common fluorinated solvents. Non limiting examples of suitable fluorinated solvents for dissolving the copolymers of the invention are fluoropolyethers (e.g. Galden^{®} by Solvay Specialty Polymers Italy SpA), dihydroperfluoropolyethers (e.g. H-Galden^{®} by Solvay Specialty Polymers Italy SpA), hydrofluoroethers, fluorinated and perfluorinated ethers optionally containing one or more hydrogen atoms in the end groups, perfluoroalkanes optionally containing oxygen atoms or heteroatoms (e.g. nitrogen), such as perfluoro(n-butyl-tetrahydrofurane), perfluorinated aromatic solvents, such as hexafluorobenzene.

An additional object of the present invention is an article comprising a film or a coating comprising polymer (P) as above detailed. Preferably the article comprises a film or coating consisting of polymer (P).

In an embodiment the article has a glass surface. The film or coating comprising polymer (P) is directly adhered to the glass surface of the article. Films may be applied to a glass substrate by common techniques, e.g. by heat-lamination.

Notable examples of articles having a glass surface which may advantageously comprise a film or coating comprising polymer (P) are: corrective lenses, camera lens elements, displays, telescopes, solar panels and components of OLED and OFET displays.

All definitions and preferences defined previously within the context of the polymer (P) apply to the film, coatings and articles comprising polymer (P).

The invention will be now described in more detail with reference to the following examples, whose purpose is merely illustrative and not intended to limit the scope of the invention.

Should the disclosure of any of the patents, patent applications, and publications that are incorporated herein by reference conflict with the present description to the extent that it might render a term unclear, the present description shall take precedence.

EXAMPLES

MATERIALS

**Glass substrate used in the adhesion tests:** Pyrex glass plates (4x4 cm). Before use, the glass plates were carefully washed with acetone and rinsed with water.

**HYFLON® AD40:** a tetrafluoroethylene/2,2,4-trifluoro-5-trifluoromethoxy-1,3-dioxole copolymer containing 40 mol% of 2,2,4-trifluoro-5-trifluoromethoxy-1,3-dioxole (TTD) commercially available from Solvay Specialty Polymers Italy SpA was used as the reference.

**Polymers samples P1 to P4** containing recurring units derived from tetrafluoroethylene (TFE), 2,2,4-trifluoro-5-trifluoromethoxy-1,3-dioxole (TTD) and CF₂=CFOCF₂CF₂-SO₂F (VEFS) copolymer were prepared as described in EP 1067145 A (AUSIMONT SPA) 10.01.2001 .

The preparation of polymer P1 is provided in detail as an example of the general procedure.

A 5 I steel AISI 316 vertical autoclave equipped with a stirrer working at 650 rpm was utilized. After vacuum, 3500 cc of demineralized water and 35 ml of an aqueous microemulsion of perfluoropolyether, prepared according to Example 1 of US 4864006, were introduced in sequence into the autoclave. The reactor was heated up to 75°C and 18 ml of VEFS and 110 g of TTD (initial load) were introduced. The pressure of 14 absolute bar was reached in the reactor by feeding TFE. 35 cc of an aqueous solution of initiator (ammonium persulphate) having a concentration of 20 g/ I were introduced. During the polymerization, the reaction pressure was maintained constant at 14 bars by means of a continuous addition of TFE. For each 10 g of TFE introduced into the reactor, 3 ml of VEFS and 16 g of TTD were charged. At the end of the polymerization a total of 413 g of TTD, 75 ml of VEFS and 200 g of TFE were introduced into the autoclave. The polymerization latex was coagulated with nitric acid to obtain polymer P1.

The intrinsic viscosity, measured according to the method reported in US 7393906, was 45 cc/g.

**Light transmittance determination**

Light transmittance was determined on polymer film samples, having a thickness of 50 microns, using a "Perkin Elemer Lambda 2" UV/VIS spectrophotometer.

**General procedure for the adhesion tests**

Polymer solutions were prepared dissolving each polymer sample in Galden^{®} D02T (a perfluoropolyether by Solvay Specialty Polymers Italy SpA). The solution contained 7 wt% polymer.

By using a pipette, 2 g of each polymer solution were deposited on a glass plate and then heated at 135°C for 2 hours and at 180°C for 1 hour. Homogeneous polymer films were obtained (no bubbles were observed).

Each coated glass plate was dipped into cold water (15°C). After 15 minutes the glass plate was shaken for 1 minute in the water bath and recovered. Adhesion was evaluated on the basis of the following ranking:

**Table 1**

| | |
|---|---|
| Very Good | Film completely attached to the glass: when coated glass was shaken into the water, the film did not detach |
| Good | Film partially attached to the glass: when coated glass is shaken into the water, the attached portion of the film did not detach |
| Poor | Film partially attached to the glass: when coated glass was shaken into the water, the film detached |
| Very Poor | Film completely detached from the glass |

The polymer compositions, the results of the adhesion tests and the light transmittance in the visible region of the spectrum are reported in Table 2.

**Table 2**

| **Polymer** | **Monomer (mol%)** | **Adhesion** | **Transmittance @ 590 nm (%)** |
|---|---|---|---|
| P1 | TFE (61) / TTD (35) / VEFS (4) | Very good | 87 |
| P2 | TFE (61) / TTD (36) / VEFS (3) | Very good | 92 |
| P3 | TFE (61) / TTD (37) / VEFS (2) | Good | 93 |
| P4 | TFE (61) / TTD (38) / VEFS (1) | Poor | 95 |
| Reference | TFE (60) / TTD (40) | Very Poor | 96 |

By fine tuning the amount of fluorinated monomer containing a -SO₂X functional group (FFM) adhesion to a glass substrate can be improved without significantly deteriorating the light transmission properties of the polymer.

The improved adhesion to glass of a polymer (P) according to the invention was also determined with peeling tests performed on coated glass substrates prepared by casting a solution of the polymer sample (8% wt. of the polymer) on the glass substrate followed by drying at 130°C for 2 hours and at 130°C for 2 hour. The final coating layer had a thickness of 25 microns. The tests were carried out using an Instron^{®} 4302 dynamometer on a 15 mm wide sample at 23°C, 50% relative humidity with a peeling angle of 90° and a peeling speed of 10 mm/min. The results are reported in Table 3.

**Table 3**

| Polymer | Maximum peeling strength (N/cm) |
|---|---|
| P1 | 2.2 |
| Reference | 0.6 |

Thus, a coating made of a polymer (P) comprising 4 mol% of recurring units comprising -SO₂X functional groups shows a peeling strength from a glass substrate which is at least 3 times higher than that of the reference polymer which does not contain -SO₂X functional groups.

## Claims

1. An amorphous fluorinated polymer comprising: at least 20 mol% of recurring units derived from at least one fluorinated monomer providing alicyclic structures in the polymer main chain [fluorinated monomer (CM)]; from 1.5 to 7.5 mol% of recurring units derived from at least one fluorinated monomer comprising -SO₂X functional groups [fluorinated functional monomer (FFM)]; and optionally recurring units derived from at least one ethylenically unsaturated fluorinated monomer [ethylenically unsaturated fluorinated monomer (FM)] in an amount complementary to 100 mol%.

2. Amorphous fluorinated polymer according to claim 1 wherein the fluorinated monomer (CM) is selected from the group consisting of: the fluorodioxoles of formula (I): 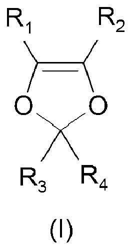 wherein R₁, R₂, R₃ and R₄, equal to or different from each other, are independently selected from the group consisting of -F, a C₁-C₆ fluoroalkyl, optionally comprising one or more oxygen atoms, a C₁-C₆ fluoroalkoxy, optionally comprising one or more oxygen atoms; the fluorodioxolanes of formula (II): 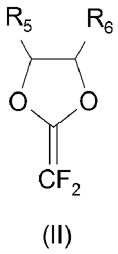 wherein R₅ and R₆, equal to or different from each other, are independently selected from the group consisting of -F, a C₁-C₆ fluoroalkyl, optionally comprising one or more oxygen atoms, a C₁-C₆ fluoroalkoxy, optionally comprising one or more oxygen atoms; and the cyclopolymerizable monomers of formula (III): CR₇R₈=CR₉0CR₁₀R₁₁(CR₁₂R₁₃)ₐ(O)_{b}CR₁₄=CR₁₅R₁₆ (III), wherein each R₇ to R₁₆, independently of one another, is selected from -F, and a C₁-C₃ fluoroalkyl, a is 0 or 1, b is 0 or 1 with the proviso that b is 0 when a is 1.

3. Amorphous fluorinated polymer according to claim 1 or 2 wherein the fluorinated monomer (CM) is selected from the group consisting of the fluorodioxoles of formula (I).

4. Amorphous fluorinated polymer according to claim 3 wherein R₁=R₃=R₄= -F and R₂ is -OCF₃.

5. Amorphous fluorinated polymer according to anyone of the preceding claims wherein the at least one fluorinated functional monomer (FFM) is selected from the group consisting of: sulfonyl halide fluoroolefins of formula: CF₂=CF(CF₂)ₚ SO₂X wherein p is an integer between 0 and 10, preferably between 1 and 6, more preferably p is equal to 2 or 3, and wherein X is chosen among halogens (Cl, F, Br, I), -O-M⁺, wherein M⁺ is a cation selected among H⁺, NH₄⁺, K⁺, Li⁺, Na⁺, or mixtures thereof; sulfonyl halide fluorovinylethers of formula: CF₂ =CF-O-(CF₂)ₘSO₂X wherein m is an integer between 1 and 10, preferably between 1 and 6, more preferably between 2 and 4, even more preferably m equals 2, and wherein X is as defined; sulfonyl halide fluoroalkoxyvinylethers of formula: CF₂=CF-(OCF₂CF(R₁₇))_{w}-O-CF₂(CF(R₁₈))_{y}SO₂X wherein w is an integer between 0 and 2, R₃ and R₄, equal or different from each other, are independently -F, -Cl or a C₁-C₁₀ fluoroalkyl group, optionally substituted with one or more ether oxygens, y is an integer between 0 and 6; preferably w is 1, R₁₇ is -CF₃, y is 1 and R₁₈ is -F, and wherein X is as defined; sulfonyl halide aromatic fluoroolefins of formula CF₂=CF-Ar-SO₂X wherein Ar is a C₅-C₁₅ aromatic or heteroaromatic substituent, and wherein X is as defined.

6. Amorphous fluorinated polymer according to anyone of the preceding claims wherein the at least one fluorinated functional monomer (FFM) is CF₂=CFOCF ₂CF₂-SO₂F.

7. Amorphous fluorinated polymer according to anyone of the preceding claims wherein the at least one ethylenically unsaturated monomer (FM) is selected from the group consisting of: C₂-C₈ fluoroolefins; vinylidene fluoride; C₂-C₈ chloro- and/or bromo- and/or iodo-fluoroolefins; fluoroalkylvinylethers of formula CF₂=CFOR₁₉, wherein R₁₉ is a C₁-C₆ fluoroalkyl;
fluoro-oxyalkylvinylethers of formula CF₂=CFOZ, wherein Z is a C₁-C₁₂ fluoro-oxyalkyl having one or more ether groups; fluoroalkyl-methoxy-vinylethers of formula CF₂=CFOCF₂OR₂₀ in which R₂₀ is a C₁-C₆ fluororoalkyl or a C₁-C₆ fluorooxyalkyl having one or more ether groups.

8. Amorphous fluorinated polymer according to anyone of the preceding claims wherein the at least one ethylenically unsaturated monomer (FM) is tetrafluoroethylene.

9. Amorphous fluorinated polymer according to anyone of the preceding claims which comprises: from 30 to 80 mol% of recurring units derived from 2,2,4-trifluoro-5-trifluoromethoxy-1,3-dioxole; from 2.0 to 5.0 mol% of recurring units derived from CF₂=CFOCF₂CF₂-SO₂F; and recurring units derived from tetrafluoroethylene in an amount complementary to 100 mol%.

10. Use of an amorphous fluorinated polymer of any one of the preceding claims for the preparation of anti-reflective and anti-glare films or coatings, protective transparent films or coatings, dielectric films or coatings.

11. A film or a coating comprising the amorphous fluorinated polymer of any one of claims 1 to 9.

12. An article comprising the film or coating of claim 11.

13. The article of claim 12 comprising a glass surface and wherein the film or coating comprising the amorphous fluorinated polymer of any one of claims 1 to 9 is directly adhered to said glass surface.

14. The article of claim 12 or 13 selected from the group of corrective lenses, camera lens elements, displays, telescopes, solar panels and components of OLED and OFET displays.

15. A process for preparing the film or the coating of claim 11 comprising the step of casting a solution of the amorphous fluorinated polymer of any one of claims 1 to 9 in a fluorinated solvent.
